# EUROPÄISCHE PATENTANMELDUNG

(11) **EP 1 287 978 A2**
(43) Veröffentlichungstag der Anmeldung: **05.03.2003**
(21) Anmeldenummer: 02017182.3
(22) Anmeldetag: 31.07.2002
(51) Int. Cl.: B30B 11/02, B30B 15/30, B22F 3/02

(54) **Verfahren und Vorrichtung zum Pressen von Metallpulver zu einem Pressling**

(30) Priorität: 31.08.2001 DE 10142624
(71) Anmelder: Fette GmbH, 21493 Schwarzenbek (DE)
(72) Erfinder: Hinzpeter, Jürgen, 21493 Schwarzenbek (DE); Zeuschner, Ulrich, 21493 Schwarzenbek (DE); Schmidt, Ingo, 21493 Schwarzenbek (DE); Pannewitz, Thomas, 21493 Schwarzenbek (DE); Baltruschat, Udo, 22045 Hamburg (DE); Ehrich, Thorsten, 22089 Hamburg (DE); Hauschild, Ulf, 21493 Schwarzenbek (DE)
(74) Vertreter: Graalfs, Edo

(57) **Zusammenfassung**

Verfahren zum Pressen von Metallpulver zu einem Preßling in einer Pulverpresse, die eine Matrize, einen hydraulisch betätigten Oberstempel (18) und mindestens einen hydraulisch betätigten Unterstempel (14) aufweist, wobei der Unterstempel (14) während des Befüllens der Matrize mit Metallpulver in Schwingungen versetzt wird.

## Beschreibung

Die Erfindung bezieht sich auf ein Verfahren zum Pressen von Metallpulver zu einem Preßling nach dem Patentanspruch 1.

Es ist seit langem bekannt, Formteile aus Pulvermetall durch Sintern herzustellen. Für die Herstellung wird eine Presse, eine Exenter- oder Hydraulikpresse, benötigt, welche eine Matrize aufweist sowie mindestens einen Unter- und einen Oberstempel. Der Unterstempel schließt die Bohrung der Matrize von unten ab, während sie mit dem geeigneten Pulver befüllt wird. Nach dem sogenannten Ausdosieren, bei dem der Oberstempel in eine vorgegebene Position nach oben fährt und über die Matrizenbohrung hinaus befindliches Pulver entfernt wird, wird der Oberstempel abgesenkt und der Unterstempel hochgefahren, und die Pulvermasse wird zwischen den Stempeln verdichtet. Bei der Verdichtung werden die Pulverartikel mit einer Korngröße von etwa 0,1 - 500 µm miteinander "verhakt", so daß ein formstabiles Gebilde entsteht, das ohne weiteres aus der Presse entnommen und einem weiteren Bearbeitungsvorgang unterworfen werden kann, insbesondere dem anschließenden Sintern.

Während des Sinterns kommt es aufgrund von Schwindungserscheinungen zu Maßänderungen. Der Schwund ist zum einen eine Materialkonstante und richtet sich jedoch zum anderen auch nach der Dichte des Preßlings. Bei der Befüllung ist daher wesentlich, daß der Preßling über seine gesamte Ausdehnung eine möglichst gleichmäßige Dichte aufweist. Wird diese Forderung nicht erfüllt, ist unter Umständen erforderlich, den Formling nachzuarbeiten. Wird z.B. durch einen derartigen Sinterprozeß eine Frässchneidplatte hergestellt und weist sie nach dem Sintern nicht die gewünschte Maßgenauigkeit auf, ist ein Nachschleifen erforderlich. Dadurch wird jedoch der Fertigungsaufwand erhöht und der Vorteil des an sich weniger aufwendigen Sinterns ganz oder teilweise aufgehoben.

Besonders problematisch sind kompliziert geformte Bauteile, z.B. auch Wendeschneidplatten mit speziellen Spannuten und Spanleitflächen.

Das Befüllen der Matrize erfolgt üblicherweise mit Hilfe eines sogenannten Füllschuhs, der an eine Pulverquelle angeschlossen ist. Der Füllschuh bewegt sich auf der die Matrizenbohrung umgebenden Fläche der Matrize und ist mit Pulver gefüllt. Während sich der Schuh über die Bohrung bewegt, fällt das Pulver in die Matrizenbohrung. Anschließend wird der Schuh in die Ausgangsstellung zurückverstellt. Sowohl beim Füllhub als auch beim Rückhub kommt es zu einer einseitigen Verdichtung am Rand der Matrizenbohrung, und zwar in den Bereichen, die auf der Achse liegen, entlang der der Füllschuh verstellt wird.

Aus der Firmenschrift "Osterwalder Verfahrenstechnologie" der Firma Osterwalder AG, Industriering 4, CH-3250 Lyss, ist bekannt geworden, während des Füllvorgangs mit dem Füllschuh unterschiedliche Geschwindigkeiten zu erzeugen und außerdem hierbei die Matrize zu rütteln. Ferner ist aus dieser Firmenschrift bekannt geworden, während der Rückfahrbewegung des Füllschuhs eine genau definierte und mit der Füllachse synchronisierte Bewegung der Matrize auszuführen.

Aus DE 199 03 417 ist auch bekannt geworden, den Füllschuh während des Befüllvorgangs in mindestens zwei weiteren, von der ersten Richtung unterschiedlichen Richtungen über die Matrizenbohrung hinaus zu bewegen. Die sich hierbei einstellende Verdichtung an der zugeordneten Wand der Matrizenbohrung wird dabei über den Umfang der Matrizenbohrung annähernd gleichmäßig verteilt.

Aus "Mikroprozessor gesteuertes hydraulisches Pressen in der Pulvermetallogie aus Werkstatt und Betrieb" von 1986/6 Seite 80ff ist bekannt geworden, die Pulverfüllung mittels programmierbaren Geschwindigkeiten und Zeiten, Rüttelbewegungen oder Oszillationen bei der Befüllung durchzuführen. Der Preßvorgang von Ober- und Unterstempel erfolgt dann nach einem typischen Ablaufdiagramm.

Wie schon erwähnt, ist angestrebt, bei der Herstellung von Hartmetallpreßlingen eine möglichst gleiche Dichte aller Preßlinge, insbesondere im Schneidbereich zu erreichen. Dieses Ziel wird mit den beschriebenen bekannten Maßnahmen nur unvollständig erreicht.

Der Erfindung liegt daher die Aufgabe zugrunde, ein Verfahren zum Pressen von Metallpulver zu einem Preßling in einer Pulverpresse zu schaffen, bei der das Ziel gleiche Dichte aller Preßlinge über ihre Ausdehnung noch besser erreicht wird.

Diese Aufgabe wird durch die Merkmale der Ansprüche 1 und 2 gelöst.

Bei dem erfindungsgemäßen Verfahren nach Patentanspruch 1 wird der Unterstempel während des Befüllens der Matrize mit Metallpulver in Schwingungen versetzt. Wie weiter oben ausgeführt, nimmt der Unterstempel während des Befüllvorgangs eine erste Position ein. Anschließend nach der Befüllung wird er in die Ausdosierposition gefahren, so daß überflüssiges Pulver entfernt werden kann. Anschließend erfolgt das Absenken des Unterstempels zu einer Ausgangsposition für den Preßvorgang. Während der beschrieben Position und Bewegungen des Unterstempels, der auch mehrere Unterstempelabschnitte enthalten kann, findet eine Oszillation am Unterstempel statt, welche sich auf das Pulver überträgt und eine Vergleichmäßigung der Pulververteilung in der Matrizenbohrung zur Folge hat, so daß annähernd vollständige Homogenität erzielt wird. Es versteht sich, daß zusätzlich zum erfindungsgemäßen Verfahren auch die bisherigen Verfahrensmaßnahmen, wie Vibrieren des Füllschuhs und/oder der Matrize durchgeführt werden können.

Alternativ oder zusätzlich sieht das Verfahren nach Patentanspruch 2 vor, daß während des Preßvorgangs, insbesondere in der Anfangsphase, Oberund/oder Unterstempel in Schwingungen versetzt werden. Sobald das Metallpulver unter einem erheblichen Preßdruck steht, kann das Oszillieren oder Schwingen der Stempel nicht mehr dazu führen, daß sich Pulverteilchen verlagern. Daher ist ein Oszillieren der Stempel in erster Linie während der Einleitung des Preßvorgangs besonders wirksam.

Das erfindungsgemäße Verfahren ist insbesondere bei hydraulischen Pressen wirksam anwendbar. Hierzu wird der Hydraulikanordnung bzw. dem hydraulischen Antrieb eine Schwingungserzeugungseinrichtung zugeordnet, die von der Programmsteuerung der Presse angesteuert wird. Die Schwingungserzeugung kann dadurch erfolgen, daß über die Ventilanordnung, über die der Druck im Hydraulikzylinder erzeugt wird, eine oszillierende Schwingung in dem hydraulischen Medium, das den Pressenzylinder beaufschlagt, erzeugt wird. Es ist jedoch auch denkbar, mit Hilfe eines separaten hydraulischen Schwingungserzeugers, der mit dem Zylinder der hydraulischen Presse in Verbindung steht, eine gewünschte Schwingung zu erzeugen. Sowohl in dem einen als auch in dem anderen Fall ist es möglich, Frequenz und/oder Amplitude der Schwingung einzustellen und auf optimale Werte zu bringen.

Die Erfindung soll nachfolgend anhand von Zeichnungen näher erläutert werden.
- Fig. 1: zeigt äußerst schematisch eine Matrize und einen Unterstempel in der Füllposition.
- Fig. 2: zeigt die Matrize nach Fig. 1 mit Ober- und Unterstempel zu Beginn der Preßphase.

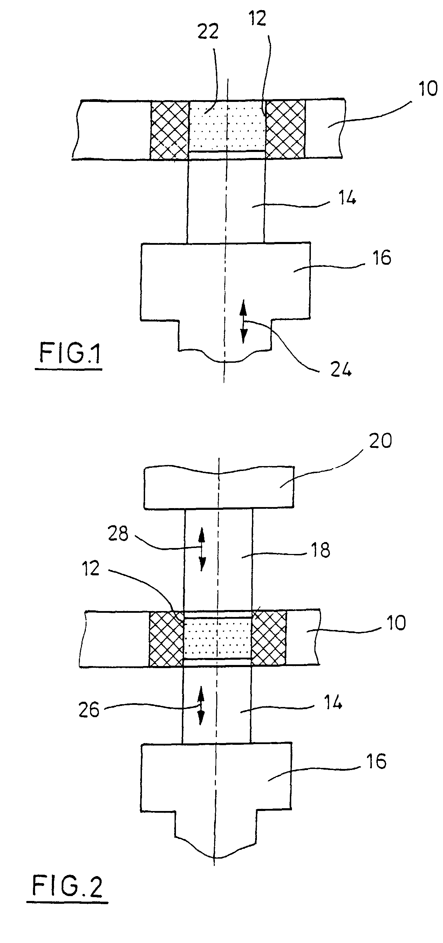

In den Figuren 1 und 2 ist eine Matrizenplatte 10 zu erkennen mit einer Matrizenbohrung 12 zur Herstellung eines Preßlings aus einem Metallpulver, beispielsweise für eine Schneidplatte zum Fräsen, Bohren oder dergleichen. Für diesen Zweck hat die Bohrung 12 normalerweise eine spezielle Kontur, was jedoch hier nicht dargestellt ist. In Figur 1 ist lediglich der Unterstempel 14 einer hydraulischen Presse zur Herstellung der Preßlinge dargestellt, der von einem Stößel 16 eines nicht weiter dargestellten unteren Pressenzylinders angetrieben ist. In Figur 2 ist auch ein Oberstempel 18 dargestellt, der von einem Stößel 20 eines nicht gezeigten oberen hydraulischen Pressenzylinders angetrieben ist.

Bei der Darstellung nach Figur 1 wurde mit Hilfe eines nicht gezeigten Füllschuhs Pulvermaterial 22 in die Bohrung 12 eingefüllt, wobei der Unterstempel 14 eine vorgegebene Einfüllposition einnimmt. Die eigentliche Dosierung erfolgt dadurch, daß anschließend der Unterstempel 14 auf eine vorgegebene Position hochgefahren wird, so daß eine vorgegebene Menge an Pulver 12 sich in der Bohrung 12 befindet. Über die Bohrung 12 hinausstehendes Material wird in geeigneter Weise entfernt. Bei dem beschriebenen Befüll- und Ausdosiervorgang wird der Unterstempel 16 mit Hilfe eines nicht gezeigten Schwingungserzeugers in eine Schwingung von vorgegebener Amplitude und Frequenz versetzt. Dies ist durch den Doppelpfeil 24 in Figur 1 angedeutet. Mit Hilfe dieser Maßnahme erfolgt eine Homogenisierung des Pulvermaterials 22 in der Bohrung 12. Auf diese Weise wird auch die angestrebte gleichmäßige Dichte des Materials erhalten, die sich dann während des Preßvorgangs nicht mehr verändern soll. Aufgrund unterschiedlicher Geometrien kann jedoch beim Pressen sehr wohl eine unterschiedliche Dichte sich ergeben. Daher wird während des Preßvorgangs, wie er in Figur 2 dargestellte ist, insbesondere in seiner Anfangsphase sowohl dem Unterstempel 14 als auch dem Oberstempel 18 eine Schwingung erteilt, wie durch die Doppelpfeile 26 bzw. 28 angedeutet. Auch hier können Amplitude und Frequenz eingestellt werden und je nach Material und Geometrie des Preßlings variiert werden.

## Patentansprüche

1. Verfahren zum Pressen von Metallpulver zu einem Preßling in einer Pulverpresse, die eine Matrize, einen hydraulisch betätigten Oberstempel und mindestens einen hydraulisch betätigten Unterstempel aufweist, **dadurch gekennzeichnet, daß** der Unterstempel während des Befüllens der Matrize mit Metallpulver in Schwingungen versetzt wird.

2. Verfahren zum Pressen von Metallpulver zu einem Preßling in einer Pulverpresse, die eine Matrize, einen hydraulisch betätigten Oberstempel und mindestens einen hydraulisch betätigten Unterstempel aufweist, **dadurch gekennzeichnet, daß** während des Preßvorgang, insbesondere in der Anfangsphase, Ober- und Unterstempel in Schwingungen versetzt werden.

3. Verfahren nach Anspruch 1 oder 2, **dadurch gekennzeichnet, daß** auch die Matrize in Schwingungen versetzt wird.

4. Pulverpresse zum Pressen von Metallpulver zu einem Preßling mit einer Matrize, einem hydraulisch betätigten Oberstempel und mindestens einem hydraulisch betätigten Unterstempel, **dadurch gekennzeichnet, daß** dem hydraulischen Antrieb für den Unter- und/oder Oberstempel eine Schwingungserzeugungsvorrichtung zugeordnet ist.

5. Pulverpresse nach Anspruch 4, **dadurch gekennzeichnet, daß** ein separater hydraulischer Schwingungserzeuger vorgesehen ist, der das hydraulische Medium in Schwingungen versetzt.

6. Pulverpresse nach Anspruch 4 oder 5, **dadurch gekennzeichnet, daß** Frequenz und/oder Amplitude der Schwingungen einstellbar sind.
